# EUROPÄISCHE PATENTSCHRIFT

(11) **EP 2 516 231 B1**
(45) Veröffentlichungstag und Bekanntmachung des Hinweises auf die Patenterteilung: **10.01.2018**
(21) Anmeldenummer: 10785015.8
(22) Anmeldetag: 16.11.2010
(51) Int. Cl.: B60T 8/36, F16K 31/06

(54) **MAGNETVENTILVORRICHTUNG**
MAGNETIC VALVE DEVICE
ENSEMBLE ÉLECTROVANNE

(30) Priorität: 23.12.2009 DE 102009055293
(43) Veröffentlichungstag der Anmeldung: 31.10.2012
(73) Patentinhaber: Robert Bosch GmbH, 70442 Stuttgart (DE)
(72) Erfinder: HEYER, Klaus, 71691 Freiberg (DE); KAESTNER, Frank, 74321 Bietigheim-Bissingen (DE); LUDEWIG, Erich, 74321 Bietigheim-Bissingen (DE); AMBROSI, Massimiliano, 71672 Marbach (DE); KEYROUZ, Fakheredine, 60316 Frankfurt/Main (DE); SCHEPP, Rene, 71336 Waiblingen (DE); ALAZE, Norbert, 71706 Markgroeningen (DE)
(86) Internationale Anmeldenummer: PCT/EP2010/067531
(87) Internationale Veröffentlichungsnummer: WO 2011/076484

(56) Entgegenhaltungen:
- EP-A1- 0 670 445
- EP-A2- 1 911 646
- DE-A1-102008 011 259
- JP-A- 2006 015 876
- US-A- 5 423 602
- US-A- 5 460 437
- US-A1- 2007 051 839

## Beschreibung

### Technisches Gebiet

Die vorliegende Erfindung betrifft eine Magnetventilvorrichtung mit einer Ventilaufnahmevorrichtung und einem Ventileinsatz eines Magnetventils, welcher in der Ventilaufnahmevorrichtung aufgenommen ist.

### Stand der Technik

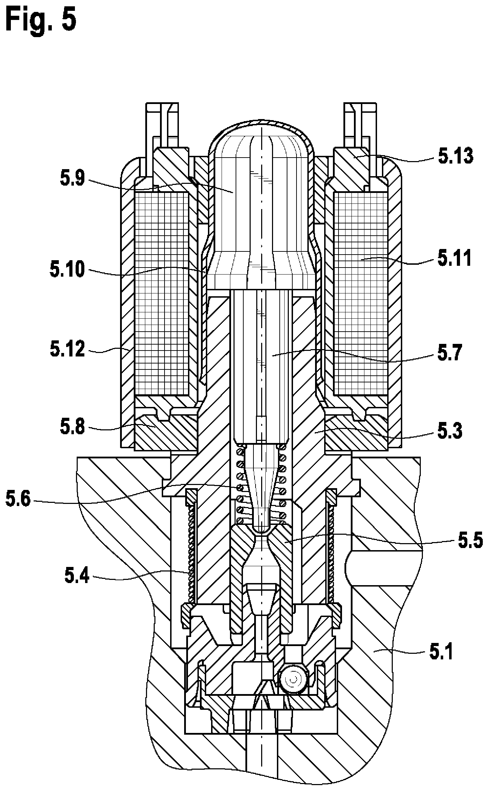

Ein herkömmliches Magnetventil insbesondere zum Einsatz in Anti-Blockier-Systemen (ABS) oder elektronischen Stabilitätsprogrammsystemen (ESP), wie in Fig. 5 dargestellt, umfasst eine Ventilaufnahmevorrichtung 5.1, in welche der Ventileinsatz 5.3 des Magnetventils MV aufgenommen wird. Die auftretenden Kräfte im Betrieb werden durch Verstemmbereiche des Ventileinsatzes 5.3 in die Ventilaufnahmevorrichtung 5.1 abgeleitet. Die Abdichtung des Systems wird durch den Einsatz eines Ventilunterteils, in Fig. 5 ein Kunststoffeinsatz, erzielt, welcher in das von der Ventilaufnahmevorrichtung aufgenommene Ende des Ventileinsatzes eingefügt wird. Der Kunststoffeinsatz dient somit dem Abdichten gegenüber den auftretenden Druckkräften und dichtet gegen die Ventilaufnahmevorrichtung ab. Ferner ist in dem Kunststoffeinsatz ein Rückschlagventil integriert. Eine derartige Vorrichtung ist z.B. aus der DE 10 2005 044 673 A1 bekannt.

Aus der Offenlegungsschrift EP 1 911 646 A2 ist eine weitere Magnetventilvorrichtung bereits bekannt, bei welcher ein Ventileinsatz in einer Ventilaufnahmevorrichtung durch eine Verstemmung axial gehalten ist und zusätzlich eine Presspassung aufweist. Aus den Offenlegungsschriften DE 10 2008 011 259 A1 und US 2007/0051839 A1 sind ähnliche Magnetventilvorrichtungen bereits bekannt.

Diese herkömmlichen Vorrichtungen können jedoch nur unzureichend die auftretenden Druckkräfte in beiden Richtungen abdichten. Dies ist beispielweise beim Einsatz als Trennventil in Anti-Blockier-Systemen oder elektronischen Stabilitätsprogrammsystemen notwendig.

Ferner sind die Herstellungskosten durch die große Anzahl von einzelnen Komponenten erhöht und der Einbau ist zeit- und kostenaufwendig.

### Zusammenfassung der Erfindung

Somit ist es wünschenswert eine verbesserte Magnetventilvorrichtung bereitzustellen, die mindestens einige der obigen Probleme löst und zu einer höheren Druckfestigkeit in beiden Richtungen führt.

Diese Aufgabe wird durch eine Magnetventilvorrichtung mit den Merkmalen von Anspruch 1 gelöst.

Eine Magnetventilvorrichtung nach einer Ausführungsform der Erfindung umfasst eine Ventilaufnahmevorrichtung und einen Ventileinsatz eines Magnetventils, welcher in der Ventilaufnahmevorrichtung aufgenommen ist. Die Magnetventilvorrichtung umfasst ferner Pressmittel, um den Ventileinsatz gegen die Ventilaufnahmevorrichtung zu pressen.

Durch das Einpressen des Pressmittels in den Ventileinsatz wird ein Anpressen des Ventileinsatzes an die Ventilaufnahmevorrichtung und somit ein kraftschlüssiges Anlegen der Ventileinsatzaußenwandung an die Innenwandung der Ventilaufnahmevorrichtung erzielt. Somit kann der Ventileinsatz und somit das Magnetventil fest mit der Ventilaufnahmevorrichtung verbunden werden. Auch eine hohe Druckfestigkeit in beide Richtungen wird ohne den Einsatz von zusätzlichen Komponenten, wie etwa einem Kunststoffeinsatz, erzielt.

Erfindungsgemäß umfasst das Pressmittel einen in den Ventileinsatz unter Spannung eingebrachten Ventilkörper des Magnetventils. Hier kann die kraftschlüssige Verbindung des Ventileinsatzes mit der Ventilaufnahmevorrichtung und die hohe Druckfestigkeit in beide Richtungen ohne den Einsatz von zusätzlichen Bauteilen erzielt werden.

Vorteilhafterweise ist der Außendurchmesser des Pressmittels oder Ventilkörpers geringfügig größer als der Innendurchmesser des Ventileinsatzes.

Eine weitere Ausführungsform umfasst eine Magnetventilvorrichtung mit einer Ventilaufnahmevorrichtung und einem Ventileinsatz eines Magnetventils, welcher in der Ventilaufnahmevorrichtung aufgenommen ist. Der Ventileinsatz weist eine Einkerbung auf, in welcher ein Dichtelement aufgenommen ist.

Das Dichtelement, das zwischen Ventileinsatz und Ventilaufnahmevorrichtung gelegen ist, führt zu einer weiter erhöhten Druckfestigkeit und Dichtwirkung in beiden Richtungen. Dies wird bei einer gleichzeitigen Reduzierung der Komponentenanzahl im Vergleich zum Stand der Technik erzielt.

In einer weiteren Ausführungsform der Magnetventilvorrichtung wird ein Axialfilter axial zwischen Ventilaufnahmevorrichtung und Ventileinsatz eingebracht, wobei der Ventileinsatz und der Axialfilter axial voneinander beabstandet sind, und ein Dichtelement zwischen Axialfilter und Ventileinsatz eingebracht ist.

Auch bei dieser Ausführungsform ist der Dichtbereich im Ventileinsatz integriert, eine höhere Dichtwirkung durch das Dichtelement wird erzielt, und eine hohe Druckfestigkeit in beiden Richtungen sichergestellt. Gleichzeitig wird der Produktions- und Montageaufwand auf ein Minimum reduziert.

Vorteilhafterweise wird ein zusätzlicher Axialfilter axial zwischen Ventilaufnahmevorrichtung und Ventileinsatz eingebracht, was eine Filterung vor dem Fluss durch das Ventil ermöglicht.

Ferner wird vorteilhafterweise eine Druckfederauflage im Inneren des Ventileinsatzes vorgesehen. Die Druckfeder greift an der Druckfederauflage an. Somit liegt die Druckfeder nicht mehr im Strömungsbereich der Flüssigkeit, welche durch das Magnetventil fließt. Dies bewirkt eine Reduzierung des Durchflusswiderstands, eine Verringerung der Federbelastung und eine geringere Abnutzung.

### Kurze Beschreibung der Zeichnung

In der Zeichnung zeigt:
Fig. 1 eine Magnetventilvorrichtung gemäß einer speziellen Ausführungsform der Erfindung, welche einen Ventilkörper als Pressmittel darstellt;
Fig. 2 eine Magnetventilvorrichtung gemäß einer nicht erfindungsgemäßen Ausführungsform der Erfindung, welche unter anderem eine zusätzliche Federauflage darstellt;
Fig. 3 eine Magnetventilvorrichtung gemäß einer weiteren speziellen Ausführungsform der Erfindung, welche ein Dichtelement in einer Einkerbung des Ventileinsatzes umfasst;
Fig. 4 eine Magnetventilvorrichtung gemäß einer weiteren speziellen Ausführungsform der Erfindung, welche einen zusätzlichen Axialfilter und ein Dichtelement umfasst;
Fig. 5 ein Magnetventil nach dem Stand der Technik; und
Fig. 6 einen Schaltplan eines Bremssystems, welches ein Trennventil nach einer der Ausführungsformen der vorliegenden Erfindung umfasst.

Ausführliche Beschreibung bevorzugter Ausführungsformen

Bevorzugte Ausführungsformen der vorliegenden Erfindung werden nachfolgend ausführlich unter Bezugnahme auf die begleitenden Zeichnungen beschrieben. Dabei sind in verschiedenen Zeichnungen gleiche oder entsprechende Bauteile mit jeweils den gleichen oder ähnlichen Bezugszeichen bezeichnet.

Gemäß einer Ausführungsform der Erfindung umfasst die Magnetventilvorrichtung eine Ventilaufnahmevorrichtung und einen Ventileinsatz eines Magnetventils, welcher in der Ventilaufnahmevorrichtung aufgenommen ist. Die Magnetventilvorrichtung umfasst ferner Pressmittel, um den Ventileinsatz gegen die Ventilaufnahmevorrichtung zu pressen und so ein Anpressen und Abdichten des Ventileinsatzes an die Ventilaufnahmevorrichtung zu erreichen.

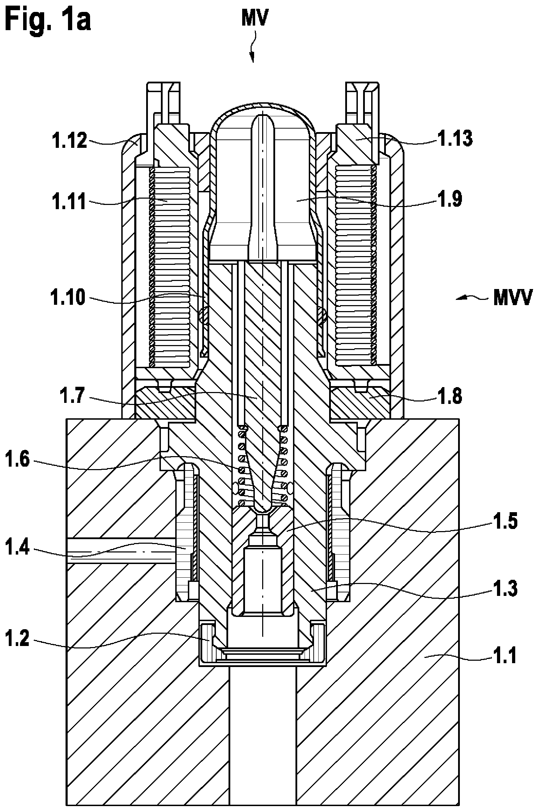

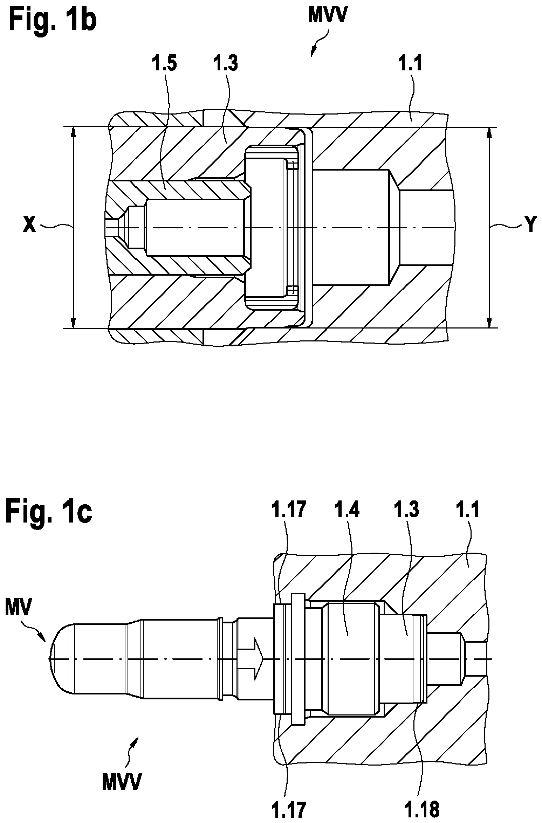

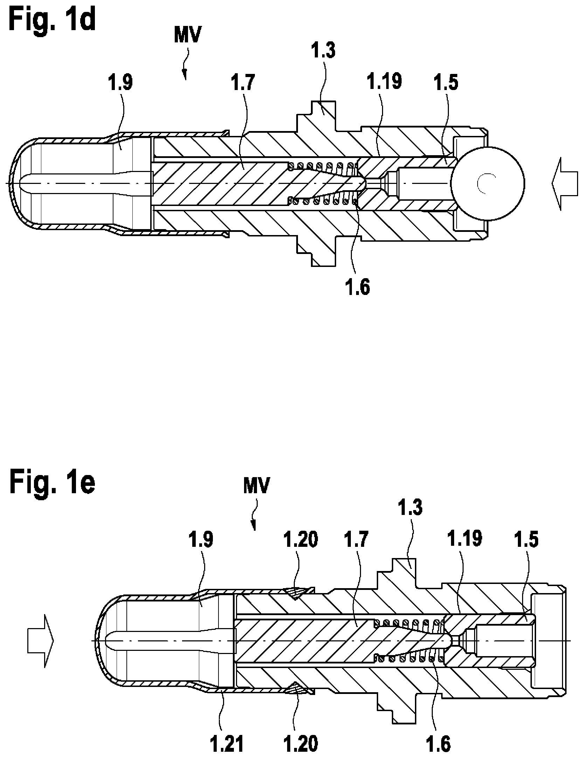

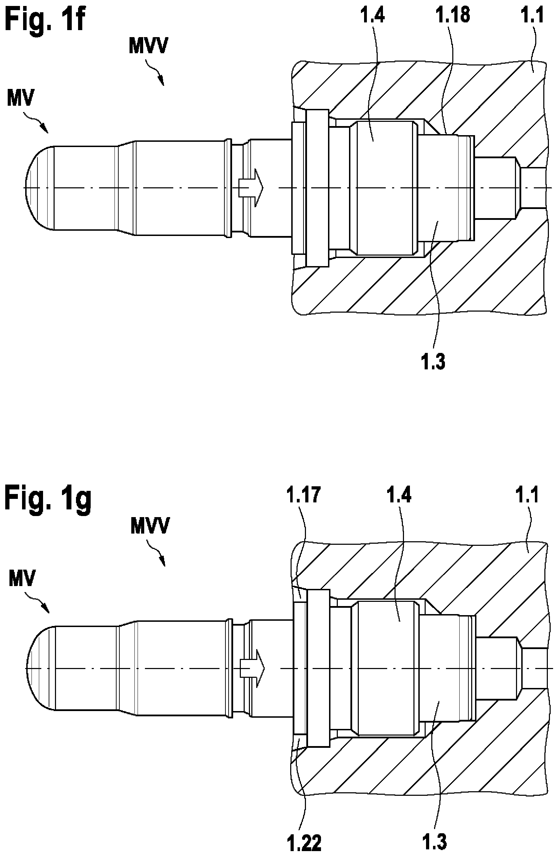

Fig. 1 zeigt eine Magnetventilvorrichtung MVV gemäß einer Ausführungsform der vorliegenden Erfindung in der das Pressmittel als Ventilkörper 1.5 ausgebildet ist. Dabei sind eine Ventilaufnahmevorrichtung 1.1 und ein Magnetventil MV vorgesehen. Das Magnetventil MV umfasst einen Ventileinsatz 1.3, der mit einem Ende in die Ventilaufnahmevorrichtung 1.1 eingeführt ist. Der Ventilkörper 1.5 ist in den Ventileinsatz 1.3 eingepresst, was zu einer Verpressung des Ventileinsatzes 1.3 mit der Ventilaufnahmevorrichtung 1.1 führt. Der Ventilkörper 1.5 ist so ausgeführt, dass der Außendurchmesser des Ventilkörpers 1.5 geringfügig größer ist als der Innendurchmesser des Ventileinsatzes 1.3 an der Stelle, an der der Ventilkörper eingepresst ist, was zu einer leichten Spreizung des Ventileinsatzes führt. Um das Einpressen weiter zu erleichtern, weist die Innenfläche des Ventileinsatzes einen konisch zulaufenden axialen Bereich auf. Ein Stößel 1.7, welcher mit einem Anker 1.9 verbunden ist, ist in den Ventileinsatz 1.3 eingeführt. Zwischen Ventilkörper 1.5 und Stößel 1.7 ist eine Druckfeder 1.6 eingebracht. Durch eine Bestromung der um den Anker 1.9 angeordneten Spule 1.11 wird die Druckfeder 1.6 gestaucht und der Stößel 1.7 innerhalb des Ventileinsatzes gegen die Kraft der Druckfeder auf den Ventilkörper 1.5 gepresst. Das Magnetventil MV ist somit geschlossen und dichtet in beide Durchflussrichtungen ab. Das öffnen der Druckfeder wird durch die Kraft der Druckfeder erzielt. Prinzipiell ist auch eine Anordnung für ein unbestromt geschlossenes Ventil denkbar.

Ferner kann ein axialer Filter 1.2 vorgesehen sein, welcher auf den Ventileinsatz aufgepresst ist.

Die Verpressung des Magnetventils MV bzw. des Ventileinsatzes 1.3 mit der Ventilaufnahmevorrichtung 1.1 wird im Beispiel der Fig. 1 durch ein Einpressen des Ventilkörpers 1.5 erreicht. Hierdurch wird eine kraftschlüssige Verbindung des Ventileinsatzes mit der Ventilaufnahmevorrichtung 1.1 hergestellt und ein Abdichten in beide Flussrichtungen mit einer hohen Festigkeit erzielt. Eine zusätzliche Verbindung des Ventileinsatzes 1.3 mit der Ventilaufnahmevorrichtung 1.1 mittels eines Verstemmbereichs wie im Stand der Technik ist erfindungsgemäß nicht erforderlich. Ein Einpressen einer anderen Komponente, wie z.B. eines Axialfilters, ist ebenfalls denkbar, hierbei kann das Pressmittel ein geringfügiges Übermaß gegenüber der Stelle des Ventileinsatzes aufweisen, an welcher das Pressmittel eingepresst werden soll.

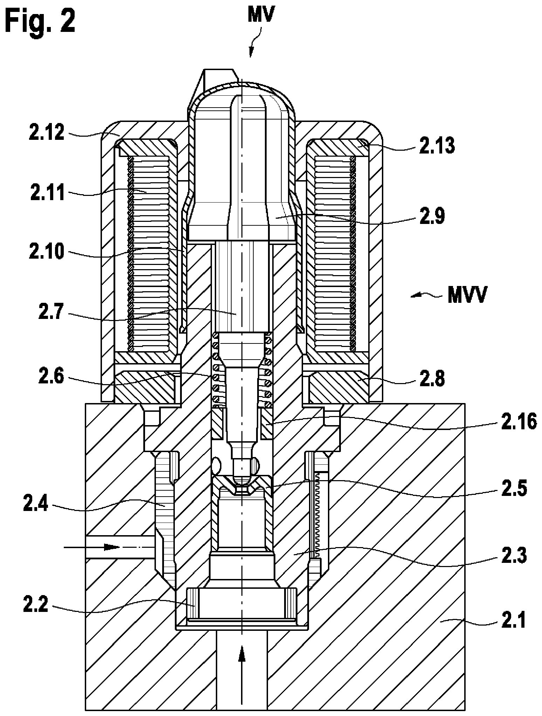

Fig. 2 zeigt eine nicht erfindungsgemäße Ausführungsform der Magnetventilvorrichtung. Ein zusätzlicher Axialfilter 2.2 ist in das in die Ventilaufnahmevorrichtung eingebrachte Ende des Ventileinsatzes eingepresst. Ein kraftschlüssiges Anpressen des Ventileinsatzes 1.3 an die Ventilaufnahmevorrichtung 1.1 wird durch eine geringfügige Spreizung des Ventileinsatzes 1.3 hervorgerufen. Der Axialfilter kann hierbei so ausgebildet sein, dass der Außendurchmesser geringfügig größer ist als der Innendurchmesser des Ventileinsatzes 1.3 am in die Ventilaufnahmevorrichtung 1.1 eindringenden Ende. Ferner kann die Innenwandung des Ventileinsatzes am in die Ventilaufnahmevorrichtung eindringenden Ende einen konischen Verlauf der Innenwandung und der Axialfilter 2.2 einen konischen Verlauf der Außenwandung aufweisen. Dies erleichtert das Einpressen des Axialfilters 2.2 in den Ventileinsatz.

Ferner kann wie Fig. 2 darstellt eine zusätzliche Auflage 2.16 im Inneren des Ventileinsatzes 2.3 vorgesehen sein. Die Druckfeder 2.6 ist nun zwischen der Druckfederauflage 2.16 und dem Stößel 2.7 gelegen. Somit liegt die Druckfeder 2.6 außerhalb des Strömungsbereichs der Flüssigkeit. Dies führt zu einer Verringerung des Strömungswiderstands und verringert die Belastung und Abnutzung der Druckfeder 2.6. Die Druckfederauflage 2.16 kann entweder als eingepresster Ring, oder Teil des Ventileinsatzes z.B. in Form eines Vorsprungs ausgebildet sein.

Durch das Anpressen des Ventileinsatzes 2.3 an die Ventilaufnahmevorrichtung 2.1 wird eine Abdichtung des Ventils in beide Durchflussrichtungen erzielt und die Druckfestigkeit erhöht. Der kraftschlüssige Verbund von Ventileinsatz 2.3 und Ventilaufnahmevorrichtung 2.1 wird ohne Ventilunterteil oder Verstemmflansch erzielt.

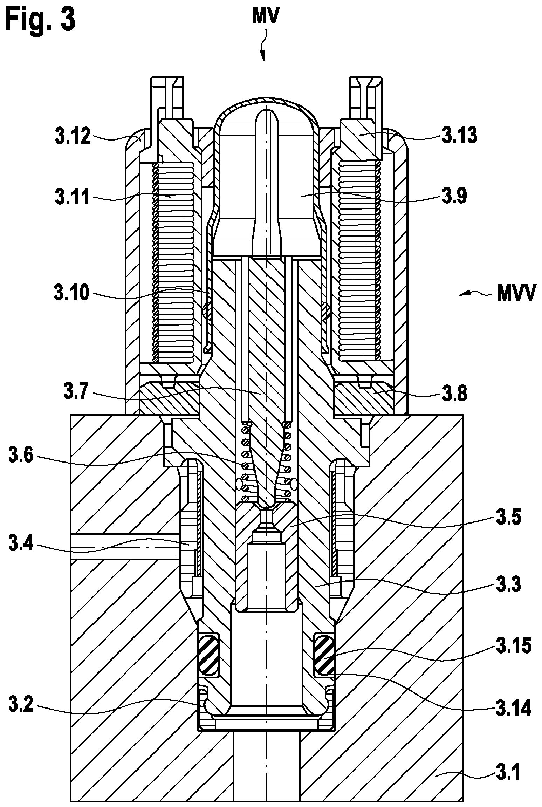

Fig. 3 zeigt eine weitere beispielhafte Ausführungsform der Erfindung. Hierbei wird der Ventileinsatz 3.3 in die Ventilaufnahmevorrichtung 3.1 eingepresst. Der Ventileinsatz 3.3 ist so ausgeführt, dass er eine Einkerbung 3.14 am in das in den Ventileinsatz eingeführten Ende auf der Außenseite aufweist. In der Einkerbung 3.14 ist ein Dichtelement 3.15, welches z.B. als Elastomerdichtelement ausgeführt ist, eingebracht. Dieses dichtet zwischen dem Ventileinsatz und der Ventilaufnahmevorrichtung ab und ist vorzugweise in axialer Richtung zwischen den Ventilzuflüssen gelegen. Somit ist der Abdichtbereich direkt im Ventileinsatz 3.3 integriert. Dies führt zu einer weiteren Erhöhung der Dichtwirkung und Druckfestigkeit in beide Flussrichtungen.

Das Anpressen des Ventileinsatzes 3.3 an die Ventilaufnahmevorrichtung 3.1 wird neben der Presspassung, durch z.B. ein geringfügiges Übermaß des Ventileinsatzes, auch durch das Einpressen eines Pressmittels in den Ventileinsatz erreicht. In Fig. 3 kann beispielsweise der Ventilkörper 3.5 in den Ventileinsatz eingepresst werden und somit eine kraftschlüssige Verbindung des Ventileinsatzes mit der Ventilaufnahmevorrichtung 3.1 erzielt werden. Das Einbringen eines Axialfilters 3.2, oder eines Radialfilters 3.4 ist ebenfalls möglich. Ferner ist die Integration einer Druckfederauflage, wie in Fig. 2 dargestellt, in einer Ventilvorrichtung nach der Ausführungsform in Fig. 3 denkbar.

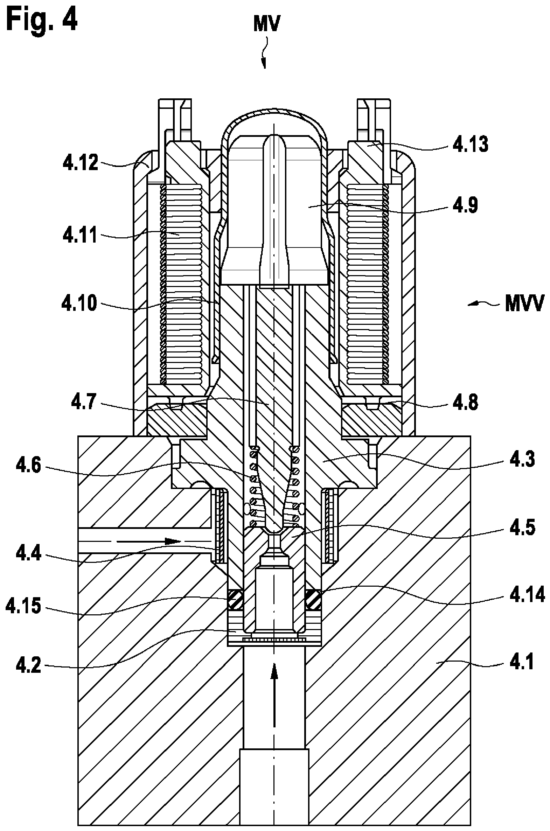

Das in Fig. 4 dargestellte Ausführungsbeispiel zeigt eine Beabstandung eines zusätzlichen Axialfilters 4.2 von dem in die Ventilaufnahmevorrichtung 4.1 eingebrachten Ventileinsatzes 4.3. Zwischen Axialfilter 4.2 und Ventileinsatz 4.3 kann somit ein Dichtelement 4.14, welches z.B. als Elastomerdichtelement ausgeführt werden kann, eingebracht werden. Somit ist auch in diesem Ausführungsbeispiel der Abdichtbereich im Ventileinsatz 4.3 integriert. Eine hohe Druckfestigkeit in beide Richtungen kann somit ohne den Einsatz zusätzlicher Komponenten und bei minimalem Bearbeitungs- und Herstellungsaufwand des Ventileinsatzes erzielt werden. Das Einpressen des Ventileinsatzes 4.3 in die Ventilaufnahmevorrichtung 4.1 erfolgt durch das Einbringen eines Pressmittels.

Die hier dargestellten Ausführungsformen bieten somit eine Abdichtung in beide Flussrichtungen, eine hohe Druckfestigkeit und gleichzeitig eine Minimierung der Herstellungskosten und des Einbauaufwands. Ferner kann durch die Einsparung eines Ventilunterteils auch die Bauhöhe der Magnetventilvorrichtung wesentlich reduziert werden.

Insbesondere ist die Magnetventilvorrichtung MVV zum Einsatz in einem Hydraulikaggregat, welches beispielsweise in einem Anti-Blockier-System (ABS) oder einem elektronischen Stabilitätsprogrammsystem (ESP) eingesetzt wird, geeignet.

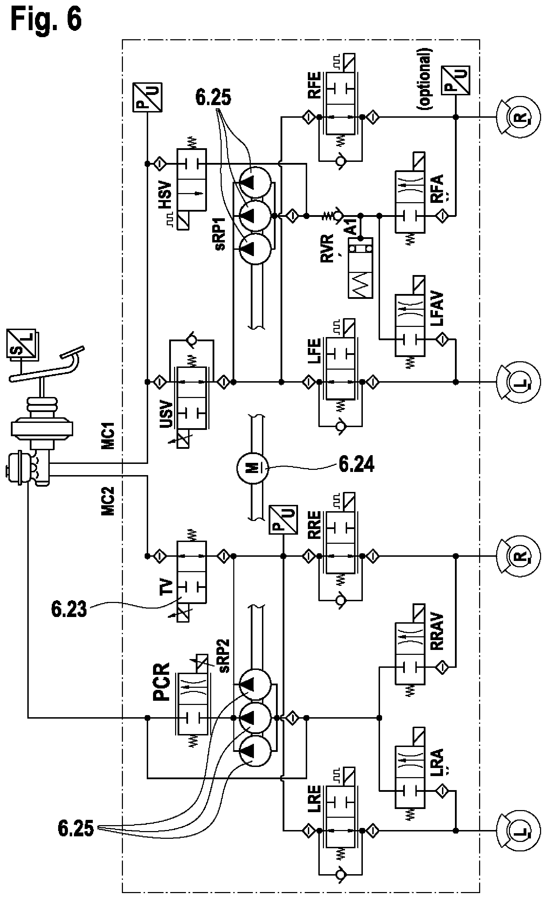

In Fig. 6 ist ein Bremssystem dargestellt. Die erfindungsgemäße Magnetventilvorrichtung MVV mit einem Magnetventil MV ist z.B. als Trennventil TV einsetzbar. Dieses Trennventil trennt den Hochdruckbereich des Bremssystems vom Niederdruckbereich. Das System umfasst ferner weitere Ventile zur Steuerung und Verteilung des Bremsdrucks auf die linken und rechten Vorder- und Hinterräder, sowie mehrere mit einem Motor betriebene Hydraulikpumpen zur Regelung des Bremsdrucks.

Aus der vorgehenden Beschreibung erkennt der Fachmann, dass verschiedene Modifizierungen und Variierungen der Ventilvorrichtung durchgeführt werden können ohne den Umfang der Erfindung zu verlassen.

Ferner wurde die Erfindung mit Bezug auf bestimmte Beispiele beschrieben, die jedoch nur zum besseren Verständnis der Erfindung dienen und diese nicht einschränken sollen.

## Patentansprüche

1. Magnetventilvorrichtung (MVV) mit einer Ventilaufnahmevorrichtung (1.1 ,3.1 ,4.1) und einem Ventileinsatz (1.3,3.3,4.3) eines Magnetventils (MV), welcher in der Ventilaufnahmevorrichtung (1.1,3.1,4.1) aufgenommen ist, und mit Pressmitteln, um den Ventileinsatz (1.3,3.3,4.3) gegen die Ventilaufnahmevorrichtung (1.1,3.1,4.1) zu pressen, **wobei** die Pressmittel zur festen Verbindung des Ventileinsatzes (1.3,3.3,4.3) mit der Ventilaufnahmevorrichtung (1.1 ,3.1 ,4.1) ohne eine zusätzliche Verbindung mit einem Verstemmbereich einen in den Ventileinsatz (1.3,3.3,4.3) unter Spannung eingebrachten Ventilkörper (1.5,3.5,4.5) des Magnetventils (MV) umfassen, durch dessen Einpressen in den Ventileinsatz (1.3,3.3,4.3) ein Anpassen des Ventileinsatzes (1.3,3.3,4.3) an die Ventilaufnahmevorrichtung (1.1,3.1,4.1) und somit ein kraftschlüssiges Anlegen einer Ventileinsatzaußenwandung an eine Innenwandung der Ventilaufnahmevorrichtung (1.1,3.1,4.1) erreicht ist.

2. Magnetventilvorrichtung nach Anspruch 1, **wobei** der Außendurchmesser des Ventilkörpers (1.5,3.5,4.5) geringfügig größer ausgeführt ist als der Innendurchmesser des Ventileinsatzes (1.3,3.3,4.3), an der Stelle, an der der Ventilkörper (1.5,3.5,4.5) eingepresst ist.

3. Magnetventilvorrichtung nach Anspruch1, **mit** einem Axialfilter (1.2; 3.2) axial zwischen Ventilaufnahmevorrichtung (1.1; 3.1) und Ventileinsatz (1.3; 3.3).

4. Magnetventilvorrichtung nach Anspruch 1, **mit** einem Axialfilter (4.2) axial zwischen Ventilaufnahmevorrichtung (4.1) und Ventileinsatz (4.3), wobei der Ventileinsatz (4.3) und der Axialfilter (4.2) axial voneinander beabstandet sind, und ein Dichtelement (4.14) zwischen Axialfilter (4.2) und Ventileinsatz (4.3) eingebracht ist.

5. Magnetventilvorrichtung nach Anspruch 1, **wobei** der Ventileinsatz (3.3) eine Einkerbung (3.14) aufweist und ein Dichtelement (3.15) in der Einkerbung aufgenommen ist.

6. Magnetventilvorrichtung nach Anspruch 4 oder 5, **wobei** das Dichtelement (3.15; 4.14) ein Elastomerdichtelement ist.

7. Magnetventilvorrichtung nach einem der Ansprüche 1, 2, 4 oder 5, **mit** einem verjüngenden Innendurchmesser des Ventileinsatzes (1.3; 3.3;).

8. Magnetventilvorrichtung nach Anspruch 5, **wobei** das Dichtelement (3.15) zwischen Ventileinsatz (3.3) und Ventilaufnahmevorrichtung (3.1) eingebracht ist.

## Claims

1. Magnetic valve device (MVV) having a valve receptacle device (1.1, 3.1, 4.1) and having a valve insert (1.3, 3.3, 4.3) of a magnetic valve (MV) which is received in the valve receptacle device (1.1, 3.1, 4.1), and having pressing means for pressing the valve insert (1.3, 3.3, 4.3) against the valve receptacle device (1.1, 3.1, 4.1), wherein, for the fixed connection of the valve insert (1.3, 3.3, 4.3) to the valve receptacle device (1.1, 3.1, 4.1) without an additional connection with a caulked region, the pressing means comprises a valve body (1.5, 3.5, 4.5), which is inserted into the valve insert (1.3, 3.3, 4.3) under stress, of the magnetic valve (MV), the pressing of which valve body into the valve insert (1.3, 3.3, 4.3) results in an adaptation of the valve insert (1.3, 3.3, 4.3) to the valve receptacle device (1.1, 3.1, 4.1) and thus in non-positively locking abutment of a valve insert outer wall against an inner wall of the valve receptacle device (1.1, 3.1, 4.1).

2. Magnetic valve device according to Claim 1, wherein the outer diameter of the valve body (1.5, 3.5, 4.5) is configured so as to be slightly larger than the inner diameter of the valve insert (1.3, 3.3, 4.3) at the location at which the valve body (1.5, 3.5, 4.5) is pressed in.

3. Magnetic valve device according to Claim 1, having an axial filter (1.2; 3.2) axially between valve receptacle device (1.1; 3.1) and valve insert (1.3; 3.3).

4. Magnetic valve device according to Claim 1, having an axial filter (4.2) axially between valve receptacle device (4.1) and valve insert (4.3), wherein the valve insert (4.3) and the axial filter (4.2) are axially spaced apart from one another, and a sealing element (4.14) is introduced between axial filter (4.2) and valve insert (4.3).

5. Magnetic valve device according to Claim 1, wherein the valve insert (3.3) has a groove (3.14), and a sealing element (3.15) is received in the groove.

6. Magnetic valve device according to Claim 4 or 5, wherein the sealing element (3.15; 4.14) is an elastomer sealing element.

7. Magnetic valve device according to any of Claims 1, 2, 4 or 5, having a narrowing inner diameter of the valve insert (1.3; 3.3).

8. Magnetic valve device according to Claim 5, wherein the sealing element (3.15) is introduced between valve insert (3.3) and valve receptacle device (3.1).

## Revendications

1. Dispositif de soupape électromagnétique (MVV) comprenant un dispositif de réception de soupape (1.1, 3.1, 4.1) et un insert de soupape (1.3, 3.3, 4.3) d'une soupape électromagnétique (MV) qui est reçu dans le dispositif de réception de soupape (1.1, 3.1, 4.1), et comprenant des moyens de pressage pour presser l'insert de soupape (1.3, 3.3, 4.3) contre le dispositif de réception de soupape (1.1, 3.1, 4.1), les moyens de pressage, pour une connexion fixe de l'insert de soupape (1.3, 3.3, 4.3) au dispositif de réception de soupape (1.1, 3.1, 4.1) sans une connexion supplémentaire à une région de matage, comprenant un corps de soupape (1.5, 3.5, 4.5) de la soupape électromagnétique (MV) introduit sous contrainte dans l'insert de soupape (1.3, 3.3, 4.3), dont l'enfoncement dans l'insert de soupape (1.3, 3.3, 4.3) permet d'obtenir une adaptation de l'insert de soupape (1.3, 3.3, 4.3) au dispositif de réception de soupape (1.1, 3.1, 4.1) et par conséquent une application par engagement par force d'une paroi extérieure de l'insert de soupape contre une paroi intérieure du dispositif de réception de soupape (1.1, 3.1, 4.1).

2. Dispositif de soupape électromagnétique selon la revendication 1, dans lequel le diamètre extérieur du corps de soupape (1.5, 3.5, 4.5) est légèrement supérieur au diamètre intérieur de l'insert de soupape (1.3, 3.3, 4.3) à l'endroit au niveau duquel le corps de soupape (1.5, 3.5, 4.5) est enfoncé.

3. Dispositif de soupape électromagnétique selon la revendication 1, comprenant un filtre axial (1.2 ; 3.2) axialement entre le dispositif de réception de soupape (1.1 ; 3.1) et l'insert de soupape (1.3 ; 3.3).

4. Dispositif de soupape électromagnétique selon la revendication 1, comprenant un filtre axial (4.2) axialement entre le dispositif de réception de soupape (4.1) et l'insert de soupape (4.3), l'insert de soupape (4.3) et le filtre axial (4.2) étant espacés axialement l'un de l'autre et un élément d'étanchéité (4.14) étant introduit entre le filtre axial (4.2) et l'insert de soupape (4.3) .

5. Dispositif de soupape électromagnétique selon la revendication 1, dans lequel l'insert de soupape (3.3) présente une encoche (3.14) et un aimant d'étanchéité (3.15) est reçu dans l'encoche.

6. Dispositif de soupape électromagnétique selon la revendication 4 ou 5, dans lequel l'élément d'étanchéité (3.15 ; 4.14) est un élément d'étanchéité élastomère.

7. Dispositif de soupape électromagnétique selon l'une quelconque des revendications 1, 2, 4 ou 5, comprenant un diamètre intérieur de l'insert de soupape (1.3 ; 3.3 ;) qui se rétrécit.

8. Dispositif de soupape électromagnétique selon la revendication 5, dans lequel l'élément d'étanchéité (3.15) est introduit entre l'insert de soupape (3.3) et le dispositif de réception de soupape (3.1).
